**Europäisches Patentamt**

**European Patent Office**

**Office européen des brevets**

(19)

(11) Veröffentlichungsnummer: **0 079 018**
**B1**

(12) EUROPÄISCHE PATENTSCHRIFT

(45) Veröffentlichungstag der Patentschrift:
27.12.85

(51) Int. Cl.⁴: **A 01 C 23/00**

(21) Anmeldenummer: **82110060.9**

(22) Anmeldetag: **30.10.82**

(54) Gerät zum Verteilen von Gülle.

(30) Priorität: **05.11.81 DE 3143910**

(43) Veröffentlichungstag der Anmeldung:
**18.05.83 Patentblatt 83/20**

(45) Bekanntmachung des Hinweises auf die Patenterteilung:
**27.12.85 Patentblatt 85/52**

(84) Benannte Vertragsstaaten:
**BE FR NL**

(56) Entgegenhaltungen:
**DE - A - 1 782 004**
**DE - A - 2 815 659**
**DE - C - 1 020 477**
**FR - A - 1 136 911**
**FR - A - 2 261 697**

(73) Patentinhaber: **Hugo Vogelsang Fass- und Maschinenbau GmbH, D-4572 Essen (DE)**

(72) Erfinder: **Hoffmann, Hubert, Dr., Ahlkenweg 66, D-2900 Oldenburg (DE)**
Erfinder: **Verhülsdonk, Burkhard, Dipl.-Ing., Löninger Strasse 18, D-4571 Bunnen (DE)**

(74) Vertreter: **Busse & Busse Patentanwälte, Postfach 1226 Grosshandelsring 6, D-4500 Osnabrück (DE)**

## Beschreibung

Die Erfindung betrifft ein Gerät zum gezielten und dosierten Verteilen von Flüssigkeiten, insbesondere Gülle, auf landwirtschaftlichen Nutzflächen gemäß dem Oberbegriff des Anspruchs 1.

Ein bekanntes Gerät dieser Art (FR-A-1 136 911) dient allgemein zum Verteilen von Flüssigkeiten und besitzt im Verteilergehäuse einen der von oben in das Verteilergehäuse einmündenden Verbindungsleitung gegenüberliegenden hohlzylindrischen Rotor, aus dem in gleichmäßigen und schnellen Stößen eine konstante Menge an Flüssigkeit in die Öffnungen des Verteilergehäuses überführt werden soll, die aus der Umfangswand des Verteilergehäuses ausmünden. Ein derartiges Gerät ist lediglich zur Verteilung von im wesentlichen reinen homogenen Flüssigkeiten geeignet, nicht jedoch in der Lage, Flüssigkeiten zu verarbeiten, die, wie insbesondere Gülle, hoch mit Fremdstoffen beladen und demgemäß stark inhomogen und zudem zähflüssig sind.

Dies gilt auch für ähnliche bekannte Geräte (DE-A1-2 815 659); DE-A-1 782 004). Diese bekannten Geräte würden bei Betrieb mit Gülle infolge der in dieser enthaltenen Stoffe wie unverdaute Pflanzenreste, Futterabfälle, Stroh und Heu etc. schon nach kürzester Frist verstopfen und dementsprechend nicht in der Lage sein, ein auch nur halbwegs gleichmäßiges Verteilen sicherzustellen.

Der Erfindung liegt die Aufgabe zugrunde, ein Gerät der im Oberbegriff des Anspruchs 1 genannten Art zu schaffen, das auch zur Verteilung von stark mit Fremdstoffen beladenen Flüssigkeiten, vor allem Gülle, geeignet ist und es ermöglicht, auch bei derartigen Flüssigkeiten eine gezielte und gleichmäßig dosierte Verteilung vorzunehmen.

Zur Lösung dieser Aufgabe ist das Gerät nach der Erfindung gekennzeichnet durch die im kennzeichnenden Teil des Anspruchs 1 angegebenen Merkmale. Hinsichtlich zahlreicher bevorzugter weiterer Ausgestaltungen wird auf die Ansprüche 2 bis 19 verwiesen.

Das erfindungsgemäße Gerät ermöglicht erstmals auch für Gülle und ähnliche Flüssigkeiten eine gezielte, gleichmäßig dosierte Verteilung der Flüssigkeit bei bodennaher Austragung auf landwirtschaftlichen Nutzflächen, wobei der im Verteilergehäuse umlaufende Rotor mit seinen an den äußeren freien Enden der vorstehenden Ansätze gelegenen Auslaßöffnungen im Verein mit der am äußeren Ende jedes Ansatzes angeordneten gekrümmten Platte zum einen ein Dosierorgan für die Verteilung der Flüssigkeit auf die einzelnen Austragleitungen bildet und zum anderen ein Nachmisch- und Zerkleinerungsorgan darstellt, in dem die Flüssigkeit eine Zwangsverwirbelung erfährt, während Festpartikel im Bereich des Übergangs aus dem Rotor in die Anschlußstutzen des Verteilergehäuses zerschnitten bzw. zerschlagen werden. Darüber hinaus beeinflußt der Rotor infolge der auf die Flüssigkeit in seinem Inneren ausgeübten Zentrifugalwirkung deren Förderung, während gleichzeitig ein druckloser Ablauf in den Austragleitungen zu deren Auslaßenden hin gegeben ist.

Für Gülle fanden bislang Verteiler verschiedenster Ausführungen Anwendung, welche die Gülle in einem Sprühschleier austrugen, der insbesondere bei bereits aufgegangenen Saaten Verätzungen der Pflanzen, Geruchsbelästigungen der Umwelt und im übrigen auch Ungleichmäßigkeiten in der Verteilung auf der Nutzfläche zur Folge hat. So sind Dosierungsabweichungen z. B. zwischen Fahrspurbereichen und Randbereichen von über 30% die Regel mit der Folge von Überdüngungsbereichen und Mangeldüngungsbereichen, die im Pflanzenbestand in Gestalt von Streifenbildungen sichtbar werden.

Demgegenüber schafft das Gerät nach der Erfindung auch bei der Austragung von Gülle eine Dosiergenauigkeit mit unter 10% liegenden Dosierungsabweichungen unter Vermeidung von Verätzungen der Pflanzen und der Geruchsbelästigung der Umwelt. Die gezielte und dosierte Austragung erbringt dabei vor allem in Reihenkulturen besonders gute Ergebnisse.

Ein Ausführungsbeispiel des Gegenstandes der Erfindung ist in der Zeichnung näher veranschaulicht. Es zeigt

Fig. 1 eine schematische Seitenansicht eines an einen Güllewagen angebauten Gerätes nach der Erfindung,

Fig. 2 eine Draufsicht zu Fig. 1,

Fig. 3 einen abgebrochenen vertikalen Querschnitt durch die Verteilervorrichtung, und

Fig. 4 einen vereinfachten Schnitt nach der Linie IV-IV in Fig. 3.

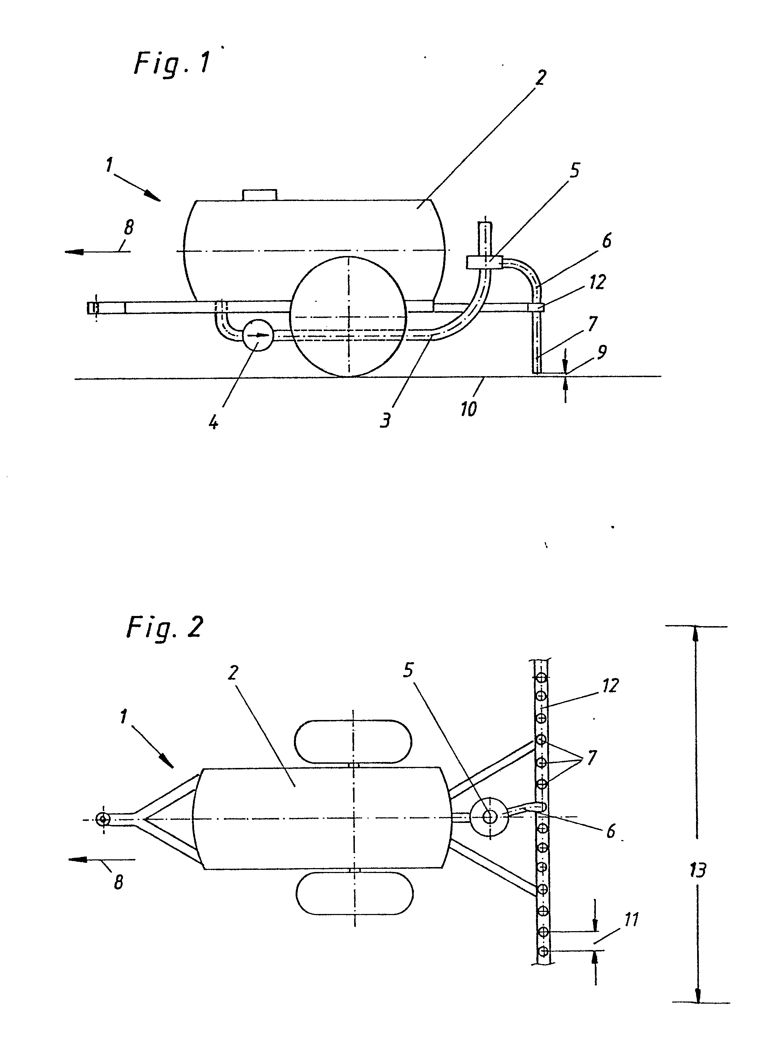

Fig. 1 veranschaulicht einen Güllewagen 1 in einer üblichen Ausführung als Anhängefahrzeug, der als Vorratsbehälter einen Tank 2 besitzt. Von diesem Tank 2 führt eine Verbindungsleitung 3 mit einer in diese eingeschalteten Förderpumpe 4 zu einer Verteilervorrichtung 5, an die eine Mehrzahl von abwärts verlaufenden Austragleitungen 6 angeschlossen ist. Die nach unten gerichteten Auslaufenden 7 der Austragleitungen 6 münden in einer Reihe quer zur Fahrtrichtung 8 des Gerätes in geringem Abstand 9 oberhalb der Bodenfläche 10 offen aus. Der gegenseitige Abstand der Auslaufenden 7 ist mit 11 bezeichnet und ebenso wie der Bodenabstand 9 einstellbar. Hierzu sind die Austragleitungen 6 stellbar abgestützt. Die Gesamtbreite 13 des bearbeiteten Bodenstreifens hängt von der Zahl der Austragleitungen 6 und den gewählten Abständen 11 der Auslaufenden 7 ab und kann weitgehend beliebig gestaltet werden.

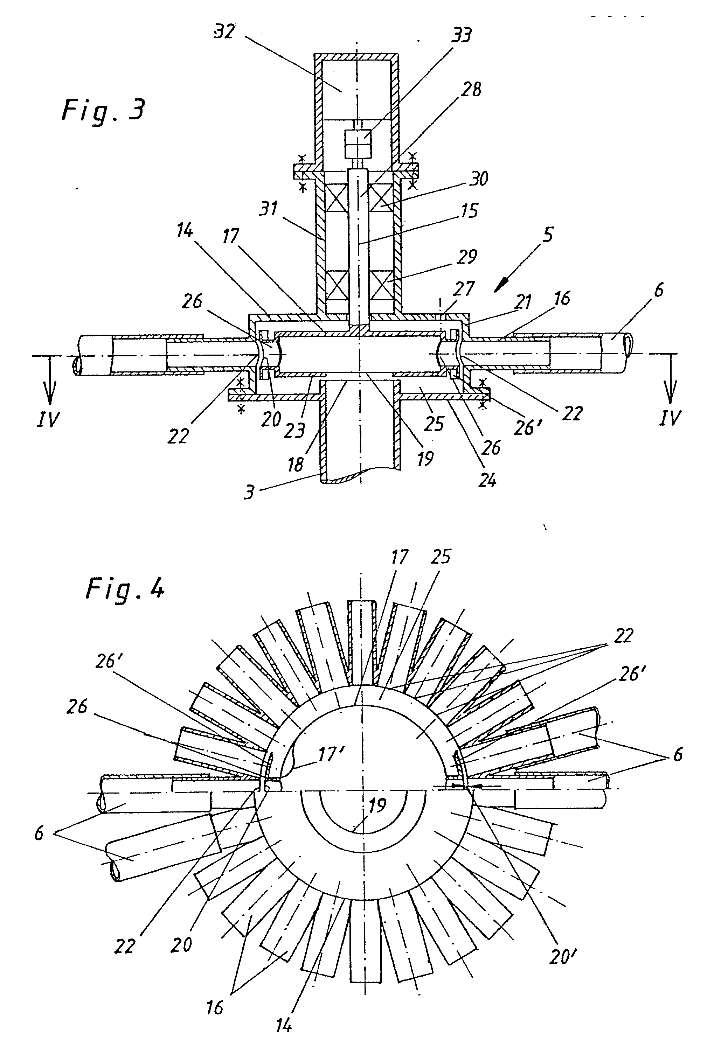

Wie den Fig. 3 und 4 näher entnommen werden kann, weist die Verteilervorrichtung 5 ein geschlossenes zylindrisches Verteilergehäuse 14 mit vertikaler oder annähernd vertikaler Mittelachse 15 auf, in das die Verbindungsleitung 3 koaxial von unten her einmündet, und aus dem eine Mehrzahl von Anschlußstutzen 16 für die Austragleitungen 6 sternförmig ausmünden, und zwar senkrecht zur Mittelachse 15.

Im Verteilergehäuse 14 ist als Verteilorgan ein koaxial angetrieben umlaufender Rotor 17 vorgesehen, der seinerseits als zylindrischer Hohlkörper ausgebildet ist. Der Rotor 17 hat eine der Mündung 18 der Verbindungsleitung 3 gegenüberliegende axiale Einlaßöffnung 19 und besitzt am Umfang zumindest eine radiale Auslaßöffnung 20. Bei dem dargestellten Ausführungsbeispiel ist der Rotor 17 mit zwei diametral und zueinander koaxial angeordneten Auslaßöffnungen 20 versehen. Die Anschlußstutzen 16 weisen ihrerseits in der Umfangswand 21 des Verteilergehäuses 14 Eintrittsöffnungen 22 auf, die bei Umlaufen des Rotors 17 mit dessen Auslaßöffnungen 20 nacheinander und vorübergehend jeweils in fluchtende Gegenüberstellung gelangen.

Die axiale Einlaßöffnung 19 des Rotors 17 ist in dessen Bodenwand 23 angeordnet und liegt der aufwärts gerichteten Mündung 18 der die Bodenwand 24 des Verteilergehäuses 14 durchgreifenden Verbindungsleitung 3 in gleichmäßigem, geringem Abstand gegenüber, so daß gegenüber dem Zwischenraum 25 zwischen den Wandungen des Verteilergehäuses 14 eine Spaltdichtung vorliegt. Das Mündungsende der Verbindungsleitung 3 ist dabei wie aus Fig. 3 ersichtlich über die Bodenwand 24 des Verteilergehäuses 14 aufwärts vorgezogen.

Der lichte Querschnitt der Mündung 18 der Verbindungsleitung 3 und der Einlaßöffnung 19 des Rotors 17 sind untereinander form- und flächengleich und dabei wie dargestellt kreisförmig.

Die Auslaßöffnungen 20 des Rotors 17 können einen kreisförmigen, rechteckigen oder quadratischen Querschnitt haben und besitzen ferner bevorzugt eine lichte Höhe in Richtung der Mittelachse 15 gesehen, die etwa der lichten Höhe des Innenraumes des Rotors gleich ist. Die Eintrittsöffnungen 22 der Anschlußstutzen 16 am Verteilergehäuse 14 haben bevorzugt einen rechteckigen oder quadratischen Querschnitt. Dabei ist die lichte Querschnittsfläche der Eintrittsöffnung 22 eines jeden Anschlußstutzens 16 mindestens so groß wie die liche Querschnittsfläche jeder Auslaßöffnung 20 des Rotors 17.

Die Auslaßöffnungen 20 des Rotors 17 liegen in gleichmäßigem, geringem Abstand 20' zu der die Eintrittsöffnungen 22 der Anschlußstutzen 16 enthaltenden Innenfläche der Umfangswand 21 des Verteilergehäuses 14, so daß auch hier zwischen den Auslaßöffnungen 22 und der Innenfläche der Umfangswand 21 des Verteilergehäuses 14 eine Spaltdichtung zum Zwischenraum 25 hin gegeben ist.

Die Auslaßöffnungen 20 des Rotors 17 können von einfachen Aussparungen in der Umfangswand des Rotors 17 gebildet sein, in welchem Falle jedoch der Abstand zwischen den Umfangswänden des Verteilergehäuses 14 und des Rotors 17 insgesamt sehr gering gehalten werden muß. Dadurch würde der Zwischenraum 25 zwischen den Wandungen des Verteilergehäuses 14 und des Rotors 17 gewissermaßen dichtend unterbrochen, was nicht so erwünscht ist. Deshalb werden die Auslaßöffnungen 20 des Rotors 17 jeweils vom äußeren freien Ende eines vorstehenden Ansatzes 26 gebildet, der von der zylindrischen Umfangswand des Rotors jeweils radial vorsteht und den Zwischenraum zwischen den Umfangswänden des Rotors und des Verteilerkörpers 14 nahezu vollständig durchgreift.

An dem äußeren Ende jeden Ansatzes 26 ist vorteilhaft eine Spritzplatte 26' vorgesehen, die bei dem dargestellten Beispiel eine im wesentlichen rechteckige Grundform und eine Außenfläche besitzt, die in Umfangsrichtung gesehen kreisbogenabschnittförmig gekrümmt ist. Mit der Außenfläche der Spritzplatte 26' fällt die Fläche der Auslaßöffnung 20 zusammen. Die Spritzplatte 26' erstreckt sich im wesentlichen über die Höhe der Eintrittsöffnungen 22 der Anschlußstutzen 16 und besitzt eine Breite, die, in Umfangsrichtung des Rotors 17 gesehen, der Gesamtbreite von drei jeweils benachbarten Eintrittsöffnungen 22 zumindest gleich ist. Die Spritzplatte 26' hat jeweils in Umfangsrichtung weisende, in der Außenfläche gelegene Randkanten, die durch eine innenseitige Anschärfung als Schneidkanten ausgebildet sind.

Sowohl die Auslaßöffnungen 20 des Rotors 17 als auch die Eintrittsöffnungen 22 der Anschlußstutzen 16 sind ferner zur Bildung von Schneidkanten jeweils scharfkantig begrenzt. Vorteilhaft ist auch die axiale Einlaßöffnung 19 in den Rotor 17 zur Bildung einer Schneidkante scharfkantig umgrenzt.

Die lichte Querschnittsfläche der Einlaßöffnung 19 des Rotors und dementsprechend die der Verbindungsleitung 3 ist vorzugsweise so bemessen, daß bei maximaler Leistung der Förderpumpe 4 die Gülle am Eintritt in den Rotor 17 einen Überdruck von zumindest etwa 0,5 bar besitzt. In bezug auf die Querschnittsgesamtfläche der Auslaßöffnungen 20 des Rotors 17 ist dabei die Querschnittsfläche der Einlaßöffnung 19 des Rotors 17 etwa größer, so daß auch unter Berücksichtigung der Umlaufbewegung des Rotors 17 die Gülle im Innenraum des Rotors 17 bis an dessen Auslaßöffnungen 20 heran diesen Überdruck behält.

Bei dem dargestellten Ausführungsbeispiel sind die Mittelachsen der Auslaßöffnungen 20 bzw. der Ansätze 26 radial gerichtet, und auch die Mittelachsen der Eintrittsöffnungen 22 der Anschlußstutzen 16 haben eine entsprechende radiale Ausrichtung. Da jedoch die aus den Auslaßöffnungen 20 strömende Flüssigkeit infolge des Umlaufens des Rotors 17 eine Strömungsrichtung erhält, die in bezug auf das feststehende Verteilergehäuse 14 von der Radialen abweicht, kann in Abweichung von dem dargestellten Beispiel auch vorgesehen werden, daß die Mittelachse jeder Auslaßöffnung 20 mit der Mittelachse jeder ihr fluchtend gegenüberliegenden Eintrittsöffnung 22 einen Winkel einschließt, der einen ablenkungsfreien oder -armen Strömungsverlauf der aus der Auslaßöffnung 20 austretenden Flüssigkeit hinter der Einlaßöffnung 22 gewährleistet. So kann z. B. vorgesehen sein, daß die Mittelachse jeder Auslaßöffnung 20 entgegen der Umlaufrichtung des Rotors 17 um einen Winkel von z. B. 30° von der Radialen abweicht, und mit der Mittelachse der gegenüberliegenden Eintrittsöffnung 22, die ebenfalls um einen Winkel von der Radialen abweichen kann, einen stumpfen Winkel einschließt.

Im Inneren des Rotors 17 können ferner Führungswände 17' vorgesehen sein, die die Strömung zu der bzw. zu den Auslaßöffnung(en) 20 hinlenken und die Aufgabe haben, insbesondere auf der jeweils der Auslaßöffnung 20 in Umlaufrichtung des Rotors 17 abgewandten Rotorinnenseite die Bildung von Strömungsräumen zu vermeiden, in denen die Strömungsgeschwindigkeit stark herabgesetzt ist und dadurch Ablagerungen auftreten können.

In der oberseitigen Wand des Verteilergehäuses 14 ist eine (oder mehrere) Verbindungsöffnung 27 zur Umgebung hin vorgesehen, durch die Luft in den Zwischenraum 25 eingesaugt werden kann, um den durch die Wirkung der Güllestromung in der Verteilervorrichtung 5 entstehenden Unterdruck auszugleichen und es ferner auch der Gülle in den Austragleitungen 6 zu gestatten, drucklos auszufließen.

Der Rotor 17 ist am unteren Ende einer die Oberseite des Verteilergehäuses 14 unter Abdichtung durchgreifenden Antriebswelle 28 angebracht, die mit Hilfe von Lagern 29, 30 in einem Gehäuse 31 auf der Oberseite des Verteilergehäuses 14 axial und radial gelagert ist. Zum Antrieb der Welle 28 dient ein Antriebsmotor 32, der über eine Kupplung 33 mit dem oberen freien Ende der Antriebswelle 28 kuppelbar ist.

Als Antriebmotor 32 kann ein solcher vorgesehen sein, mit dem die Drehzahl des Rotors 17 stufenlos oder in Stufen veränderbar ist, und zwar zweckmäßig in Abhängigkeit von der Förderleistung der Förderpumpe 4, die ihrerseits vorteilhaft in ihrer Förderleistung verstellbar ist.

Für den Betrieb des Gerätes werden nach entsprechender Einstellung der Abstände 9, 11 der Auslaßenden 7 der Austragleitungen 6 der Antriebsmotor 32 und die Förderpumpe 4 in Tätigkeit gesetzt, und die durch die Verbindungsleitung 3 zuströmende Gülle tritt in den Rotor 17 ein, aus dessen Auslaßöffnungen 20 sie bestrebt ist, radial nach außen aus- und in die Eintrittsöffnungen 22 der Anschlußstutzen 16 überzutreten. Die Auslaßöffnungen 20 des Rotors 17 wirken dabei wie Düsen, die mit kontantem Flüssigkeitsdruck beaufschlagt werden. Während des Zeitraumes T, in dem der Rotor 17 eine einzige volle Umdrehung ausführt, ist jede einzelne der n Eintrittsöffnungen 22 für die Dauer von T/n mit jeder Auslaßöffnung 20 verbunden. Fließt durch eine Auslaßöffnung 20 der Massenstrom m, so fließt durch die Austrittsleitungen 6 jeweils ein Massenstrom m/n, der sich mit der Zahl der vorhandenen Auslaßöffnungen 20 multipliziert.

Inhaltsstoffe der Gülle wie z. B. Stroh- und Heufasern etc. werden von den Schneidkanten der scharfkantig umgrenzten Öffnungen 20, 22 zerkleinert, so daß Verstopfungen innerhalb der Verteilervorrichtung 5 ausgeschlossen sind. Infolge der pulsierenden Strömung in den Austragleitungen 6, die zweckmäßig als biegsame Schlauchleitungen ausgebildet sind, ist auch eine Verstopfung dieser Leitungen ausgeschlossen, wie sich sowohl bei Schweine-, als auch bei Rinder- sowie Hühnergülle gezeigt hat. Das drucklose Abfließen der Gülle durch die Austragleitungen 6 erbringt ein spritzfreies Ausfließen aus den Auslaufenden 7, durch die ein Verwirbeln von Gülltropfen mit der Umgebungsluft vermieden wird, so daß in Verbindung mit einem relativ dichten Ende der Austragleitungen 6 über dem Boden Geruchsbelästigungen stark vermindert werden, zumal bei einem Ausbringen auf Bodenflächen mit Pflanzenbestand dieser zusätzlich den Luftaustausch der bodennahen Schichten mit der Umgebungsluft herabsetzt.

Bei entsprechender Drehzahl des Rotors 17 wird die Strömung in jeder der Austragleitungen 6 über die Zeit betrachtet gewissermaßen quasikontinuierlich, wobei die Pufferwirkung in den Austragleitungen 6 die Zerteilungswirkung auf den Güllestrom bei der Dosierung in der Verteilervorrichtung 5 dämpft. In der Zeit zwischen den Beaufschlagungen jeder Austragleitung mit Gülle schwächen sich die von den rotierenden Auslaßöffnungen 20 des Rotors 17 in den einzelnen Austragleitungen 6 erzeugten Druckpulse mit der Folge der Bildung einer gedämpft pulsierenden Ablaufströmung in den Austragleitungen 6.

Nicht schneid- oder zerkleinerbare Gülle-Bestandteile können durch einen der Verteilervorrichtung 5 vorgeschalteten, nicht näher veranschaulichten an sich bekannten Schwerkraftabscheider entfernt werden, der beispielsweise im Tank 2 oder außerhalb desselben der Verbindungsleitung 3 vorgeschaltet oder auch in dieser angeordnet sein kann.

Das in der Zeichnung veranschaulichte und vorbeschriebene Ausführungsbeispiel bildet eine bevorzugte Ausführung, die hinsichtlich diverser Einzelheiten verschiedener Abwandlungen unterliegen kann, wobei erwähnt sei, daß das Gerät anstelle einer bevorzugten Anbringung an der Rückseite eines Güllewagens auch eine andere Zuordnung zu diesem bzw. zu irgendeinem sonst geeigneten Flüssigkeitsvorratsbehälter erhalten kann.

**Patentansprüche**

1. Gerät zum gezielten und dosierten Verteilen von Flüssigkeiten auf landwirtschaftlichen Nutzflächen, bestehend aus einer über eine Verbindungsleitung (3) an einen Flüssigkeitsvorratsbehälter (2) angeschlossene Verteilervorrichtung (5) und aus einer Mehrzahl von an diese angeschlossenen, abwärts verlaufenden Austragleitungen (6), deren nach unten gerichteten Auslaufenden in einer Reihe quer zur Fahrtrichtung des Gerätes in geringem Abstand (9) oberhalb der Bodenfläche (10) offen ausmünden, wobei die Verteilervorrichtung (5) ein geschlossenes zylindrisches Verteilergehäuse (14) mit etwa vertikaler Mittelachse (15) aufweist, in das die Verbindungsleitung (3) axial einmündet, aus dem eine Mehrzahl von Anschlußstutzen (16) für die Austragleitungen (6) sternförmig ausmünden und in dem unter Belassung eines Zwischenraumes (25) ein Verteilorgan (17) angeordnet ist, wobei das Verteilorgan als im Verteilergehäuse (14) um dessen Mittelachse angetrieben umlaufender hohlzylindrischer Rotor (17) ausgebildet ist, der eine der Mündung (18) der Verbindungsleitung (3) zugeordnete axiale Einlaßöffnung (19) aufweist und am Umfang mit zumindest einer radialen Auslaßöffnung (20) versehen ist, und wobei die Anschlußstutzen (16) Eintrittsöffnungen (22) in der Umfangswand (21) des Verteilergehäuses aufweisen, die bei Umlaufen des Rotors mit dessen Auslaßöffnung bzw. -öffnungen (20) nacheinander und vorübergehend jeweils in fluchtende Gegenüberstellung gelangen, dadurch gekennzeichnet, daß jede Auslaßöffnung (20) des Rotors (17) am äußeren freien Ende eines von der zylindrischen Umfangswand des Rotors vorstehenden und den Zwischenraum (25) zwischen der Umfangswand des Rotors und der Umfangswand des Verteilerkörpers (14) nahezu vollständig durchgreifenden Ansatzes (26) gelegen ist, und daß an dem äußeren Ende jeden Ansatzes (26) eine Platte (26') mit in Umfangsrichtung kreisbogenabschnittförmig gekrümmter, die Auslaßöffnung enthaltender Außenfläche angeordnet ist, die sich im wesentlichen über die Höhe der Eintrittsöffnungen (22) der Anschlußstutzen (16) des Verteilergehäuses (14) erstreckt und in Umfangsrichtung des Rotors (17) eine der Gesamtbreite von drei jeweils benachbarten Eintrittsöffnungen zumindest gleiche Breite aufweist.

2. Gerät nach Anspruch 1, dadurch gekennzeichnet, daß die axiale Einlaßöffnung (19) des Rotors (17) in dessen Bodenwand (23) angeordnet ist und der aufwärts gerichteten Mündung (18) der die Bodenwand (24) des Verteilerbehälters (14) durchgreifenden Verbindungsleitung (3) in gleichmäßigem, geringem Abstand gegenüberliegt.

3. Gerät nach Anspruch 2, dadurch gekennzeichnet, daß das Mündungsende der Verbindungsleitung (3) über die Bodenwand (24) des Verteilergehäuses (14) aufwärts vorgezogen ist.

4. Gerät nach Anspruch 2 oder 3, dadurch gekennzeichnet, daß der lichte Querschnitt der Mündung (18) der Verbindungsleitung (3) und der Einlaßöffnung (19) des Rotors (17) untereinander form- und flächengleich sind.

5. Gerät nach einem oder mehreren der Ansprüche 1 bis 4, dadurch gekennzeichnet, daß die Auslaßöffnung(en) (20) in der Umfangswand (21) des Rotors (17) eine lichte Höhe besitzen, die zumindest etwa der lichten Höhe des Innenraums des Rotors gleich ist.

6. Gerät nach einem oder mehreren der Ansprüche 1 bis 5, dadurch gekennzeichnet, daß die Eintrittsöffnungen (22) der Anschlußstutzen (16) einen rechteckigen oder quadratischen Querschnitt aufweisen.

7. Gerät nach einem oder mehreren der Ansprüche 1 bis 6, dadurch gekennzeichnet, daß die Auslaßöffnung(en) (20) des Rotors (17) in gleichmäßigem, geringem Abstand (20') zu der die Eintrittsöffnungen (22) des Anschlußstutzens (16) enthaltenden Innenfläche der Umfangswand (21) des Verteilergehäuses (14) gelegen ist.

8. Gerät nach einem oder mehreren der Ansprüche 1 bis 7, dadurch gekennzeichnet, daß die in Umfangsrichtung weisenden, mit der Außenfläche zusammenfallenden Randkanten der Platte (26') durch eine innenseitige Anschärfung als Schneidkanten ausgebildet sind.

9. Gerät nach einem oder mehreren der Ansprüche 1 bis 8, dadurch gekennzeichnet, daß die Auslaßöffnung(en) (20) des Rotors (17) und die Eintrittsöffnungen (22) der Anschlußstutzen (16) zur Bildung von Schneidkanten jeweils scharfkantig begrenzt sind.

10. Gerät nach einem oder mehreren der Ansprüche 1 bis 9, dadurch gekennzeichnet, daß die lichte Querschnittsfläche der Eintrittsöffnung (22) jeden Anschlußstutzens (16) mindestens so groß ist wie die lichte Querschnittsfläche jeder Auslaßöffnung (20) des Rotors (17).

11. Gerät nach einem oder mehreren der Ansprüche 1 bis 10, dadurch gekennzeichnet, daß die lichte Querschnittsgesamtfläche der Auslaßöffnung(en) (20) des Rotors (17) kleiner ist als die lichte Querschnittsfläche der Einlaßöffnung (19) des Rotors.

12. Gerät nach einem oder mehreren der Ansprüche 1 bis 11, dadurch gekennzeichnet, daß die Mittelachse der Auslaßöffnung(en) (20) bzw. der Ansätze (26) mit der Mittelachse der einer jeden gegenüberliegenden Eintrittsöffnung (22) der Anschlußstutzen (16) einen Winkel einschließt.

13. Gerät nach einem oder mehreren der Ansprüche 1 bis 12, dadurch gekennzeichnet, daß im Inneren des Rotors (17) Führungswände (17') vorgesehen sind, die die Strömung zu der bzw. zu den Auslaßöffnung(en) (20) hinlenken.

14. Gerät nach einem oder mehreren der Ansprüche 1 bis 13, dadurch gekennzeichnet, daß in der oberseitigen Wand des Verteilergehäuses (14) eine Verbindungsöffnung (27) zur Umgebung hin vorgesehen ist.

15. Gerät nach einem oder mehreren der Ansprüche 1 bis 14, dadurch gekennzeichnet, daß die Austragleitungen (6) zur Veränderung des Bodenabstandes (9) und/oder des gegenseitigen Abstandes (11) ihrer Auslaufenden (7) an einem Träger (12) verstellbar abgestützt sind.

16. Gerät nach einem oder mehreren der Ansprüche 1 bis 15, dadurch gekennzeichnet, daß der Rotor (17) am unteren Ende einer die Oberseite des Verteilergehäuses (14) unter Abdichtung durchgreifenden, ihrerseits außerhalb des Verteilergehäuses gelagerten Antriebswelle (28) angebracht ist.

17. Gerät nach einem oder mehreren der Ansprüche 1 bis 16, gekennzeichnet durch eine an sich bekannte Förderpumpe (4), die der Flüssigkeit im Bereich des Mündungsendes der Verbindungsleitung einen Überdruck von zumindest etwa 0,5 bar vermittelt.

18. Gerät nach einem oder mehreren der Ansprüche 1 bis 17, dadurch gekennzeichnet, daß die Förderpumpe (4) in ihrer Förderleistung verstellbar ist.

19. Gerät nach einem oder mehreren der Ansprüche 1 bis 18, dadurch gekennzeichnet, daß die Drehzahl des Rotors (17) über dessen Antriebsmotor (32) veränderbar ist.

## Claims

1. Equipment for the aimed and quantitatively regulated distribution of liquids on farmland, consisting of a distributor device (5) which is connected to a liquid storage tank (2) by a connecting pipe (3) and of a plurality of downwardly extending discharge pipes (6) which are connected to the distributor device and of which the downwardly directed outlet ends end openly in a row transversely to the direction of travel of the equipment at a short distance (9) above the surface of the ground (10), wherein the distributor device (5) comprises a closed cylindrical distributor casing (14) with a substantially vertikal centre axis (15) into which casing the connecting pipe (3) leads axially and from which a plurality of connection sockets (16) for the discharge pipes (6) lead in the form of a star and in which a distributing member (17) is disposed, leaving a gap (25), wherein the distributor member is constructed in the form of a hollow cylindrical rotor (17) which rotates in the distributor casing (14), being driven about its centre axis, and which comprises an axial inlet (19) associated with the mouth (18) of the connecting pipe (3) and is provided with at least one radial outlet (20) at the circumference, and wherein the connection sockets (16) comprise inlets (22) in the circumferential wall (21) of the distributor casing which each come successively and temporarily into alignment opposite the outlet or outlets (20) of the rotor during the rotation of the latter, characterized in that each outlet (20) of the rotor (17) is situated at the outer free end of an attachment (26) which projects from the cylindrical circumferential wall of the rotor and reaches almost completely through the gap (25) between the circumferential wall of the rotor and the circumferential wall of the distributor body (14), and in that disposed at the outer end of each attachment (26) is a plate (26') having an outer face which is curved in the form of a portion of an arc in the circumferential direction and contains the outlet orifice and which extends substantially over the height of the inlet orifices (22) of the connecting sockets (16) of the distributor housing (14) and has a width, in the circumferential direction of the rotor (17), at least equal to the total width of three adjacent inlet orifices.

2. Equipment as claimed in claim 1, characterized in that the axial inlet (19) of the rotor (17) is disposed in its bottom wall (23) and is situated opposite the upwardly directed mouth (18) of the connecting pipe (3) extending through the bottom wall (24) of the distributor casing (14) with slight, uniform spacing.

3. Equipment as claimed in claim 2, characterized in that the mouth end of the connecting pipe (3) is raised upwards above the bottom wall (24) of the distributor casing (14).

4. Equipment as claimed in claim 2 or 3, characterized in that the internal cross-sections of the mouth (18) of the connecting pipe (3) and of the inlet orifice (19) of the rotor (17) are alike in shape and area.

5. Equipment as claimed in any one of claims 1 to 4, characterized in that the outlet orifice(s) (20) in the circumferential wall (21) of the rotor (17) have a clear height which is at least substantially equal to the clear height of the interior of the rotor.

6. Equipment as claimed in any one of claims 1 to 5, characterized in that the inlet orifices (22) of the connection sockets (16) have a rectangular or square cross-section.

7. Equipment as claimed in any one of claims 1 to 6, characterized in that the outlet orifice(s) (20) of the rotor (17) are situated at a short, uniform distance (20') from the inner face of the circumferential wall (21) of the distributor casing (14) containing the inlet orifices (22) of the connection socket (16).

8. Equipment as claimed in any one of claims 1 to 7, characterized in that marginal edges of the plate (26') which face in the circumferential direction and coincide with the outer face are constructed in the form of knife-edges by sharpening at the inside.

9. Equipment as claimed in any one of claims 1 to 8, characterized in that the outlet orifice(s) (20) of the rotor (17) and the inlet orifices (22) of the connection sockets (16) are each bounded by sharp edges to form knife edges.

10. Equipment as claimed in any one of claims 1 to 9, characterized in that the internal cross-sectional area of the inlet orifice (22) of each connection socket (16) is at least as large as the internal cross-sectional area of each outlet orifice (20) of the rotor (17).

11. Equipment as claimed in any one of claims 1 to 10, characterized in that the total internal cross-sectional area of the outlet orifice(s) (20) of the rotor (17) is smaller than the internal cross-sectional area of the inlet orifice (19) of the rotor.

12. Equipment as claimed in any one of claims 1 to 11, characterized in that the centre axis of the outlet orifice(s) (20) or of the attachments (26) form an angle with the centre axis of each opposite inlet orifice (22) of the connection sockets (16).

13. Equipment as claimed in any one of claims 1 to 12, characterized in that provided in the interior of the rotor (17) are guide walls (17') which direct the flow towards the outlet orifice or orifices (20).

14. Equipment as claimed in any one of claims 1 to 13, characterized in that a communicating opening (27) to the environment is provided in the top wall of the distributor casing (14).

15. Equipment as claimed in any one of claims 1 to 14, characterized in that the discharge pipes (6) are adjustably supported on a support (12) in order to vary the ground clearance (9) and/or the mutual spacing (11) of their outlet ends (7).

16. Equipment as claimed in any one of claims 1 to 15, characterized in that the rotor (17) is mounted at the lower end of a drive shaft (28) which engages through the top of the distributor casing (14) with sealing and is itself mounted outside the distributor casing.

17. Equipment as claimed in any one of claims 1 to 16, characterized by a feed pump (4), known per se, which imparts an excess pressure of at least about 0,5 bar to the liquid in the region of the mouth end of the connecting pipe.

18. Equipment as claimed in any one of claims 1 to 17, characterized in that the feed pump (4) ist adjustable in its delivery.

19. Equipment as claimed in any one of claims 1 to 18, characterized in that the speed of rotation of the rotor (17) is variable through its drive motor (32).

## Revendications

1. Appareil pour épandre de manière adéquate et dosée des liquides sur des surfaces agricoles utiles, formé d'un dispositif distributeur (5) raccordé à un réservoir de liquide (2) par une conduite de raccordement et de plusieurs conduites de décharge (6) s'étendant vers le bas et raccordées à ce dispositif distributeur, les extrémités de débit orientées vers le bas de ces conduites de décharge s'ouvrant, suivant une rangée transversale à la direction d'avancement de l'appareil, à une courte distance (9) au-dessus de la surface (10) du sol, étant entendu que le dispositif distributeur (5) comprend un corps de distributeur cylindrique fermé (14) qui présente un axe central (15) à peu près vertical, dans lequel la conduite de raccordement (3) s'ouvre axialement, à partir duquel plusieurs tubulures de raccordement (16) pour les conduites de décharge (6) s'ouvrent en étoile vers l'extérieur et dans lequel un organe de distribution (17) est monté et ménage un espace intermédiaire (25), l'organe de distribution ayant la forme d'un rotor cylindrique creux (17) entraîné en rotation dans le corps de distributeur (14) autour de son axe central, ce rotor présentant un orifice d'entrée axial (19) associé à l'orifice (18) de la conduite de raccordement et étant pourvu d'au moins un orifice de sortie radial (20) à sa périphérie et les tubulures de raccordement (16) présentant des orifices d'entrée (22) dans la paroi périphérique (21) du corps de distributeur qui, lorsque le rotor tourne, sont amenés successivement et temporairement en superposition avec son ou ses orifices de sortie (20), caractérisé en ce que chaque orifice de sortie (20) du rotor (17) est situé à l'extrémité extérieure libre d'une saillie (26) se dressant sur la paroi périphérique cylindrique du rotor et traversant à peu près complètement l'espace intermédiaire (25) entre la paroi périphérique du rotor et la paroi périphérique du corps de distributeur (14), et, à l'extrémité externe de chaque saillie (26), est disposée une plaque (26') présentant une surface externe coubée dans le sens périphérique sous la forme d'un segment d'arc de cercle et contenant l'orifice de sortie, qui s'étend essentiellement sur plus de la hauteur des orifices d'entrée (22) des tubulures des raccordement (16) du corps de distributeur (14) et présente, dans le sens circonférentiel du rotor (17), une largeur au moins égale à la largeur totale de trois orifices d'entrée adjacents les aux autres.

2. Appareil suivant la revendication 1, caractérisé en ce que l'orifice d'entrée axial (19) du rotor (17) est prévu dans sa paroi inférieure (23) et l'orifice (18) orienté vers le haut de la conduite de raccordement (3) traversant la paroi inférieure (24) dur corps de distributeur (14) y est opposé à une courte distance uniforme.

3. Appareil suivant la revendication 2, caractérisé en ce que l'extrémité comportant l'orifice de la conduite de raccordement (3) so prolonge vers le haut au-dessus de la paroi inférieure (24) du corps de distributeur (14).

4. Appareil suivant la revendication 2 ou 3, caractérisé en ce que la section de passage libre de l'orifice d'entrée (18) de la conduite de raccordement (3) et de l'orifice d'entrée (19) du rotor (17) sont pareilles quant à leurs formes et à leurs aires.

5. Appareil suivant l'une quelconque des revendications 1 à 4, caractérisé en ce que le ou les orifice de sortie (20) prévus dans la paroi périphérique (21) du rotor (17) ont une hauteur libre qui est égale au moins à peu près à la hauteur libre de l'espace interne du rotor.

6. Appareil suivant l'une quelconque des revendications 1 à 5, caractérisé en ce que les orifices d'entrée (22) des tubulures de raccordement (16) ont une section rectangulaire ou carrée.

7. Appareil suivant l'une quelconque des revendications 1 à 6, caractérisé en ce que le ou les orifices de sortie (20) du rotor (17) sont disposés à une courte distance uniforme (20') de la surface interne de la paroi périphérique (21) du corps de distributeur (14) contenant les orifices d'entrée (22) des tubulures des raccordement (16).

8. Appareil suivant l'une quelconque des revendications 1 à 7, caractérisé en ce que les arêtes des bords de la plaque (26) qui correspondent à la surface extérieure et qui sont orientées dans le sens périphérique ont la forme de tranchants par suite d'un affûtage intérieur.

9. Appareil suivant l'une quelconque des revendications 1 à 8, caractérisé en ce que le ou les orifices de sortie (20) du rotor (17) et les orifices d'entrée (22) des tubulures de raccordement (16) sont délimités chacun par des arêtes vives pour former les tranchants.

10. Appareil suivant l'une quelconque des revendications 1 à 9, caractérisé en ce que l'aire de passage libre de l'orifice d'entrée (22) de chaque tubulure de raccordement (16) est au moins égale à l'aire de passage libre de chaque orifice de sortie (20) du rotor (17).

11. Appareil suivant l'une quelconque des revendications 1 à 10, caractérisé en ce que l'aire de passage libre totale de ou des orifices de sortie (20) du rotor (17) est inférieure à l'aire de passage libre de l'orifice entrée (19) du rotor.

12. Appareil suivant l'une quelconque des revendications 1 à 11, caractérisé en ce que l'axe central du ou des orifices de sortie (20) ou des saillies (26) forme un angle avec l'axe central de l'orifice d'entrée (22) opposé à la tubulure de raccordement (16).

13. Appareil suivant l'une quelconque des revendications 1 à 12, caractérisé en ce que des chicanes de guidage (17') sont prévues à l'intérieur du rotor (17) et font dévier l'écoulement vers le ou les orifices de sortie (20).

14. Appareil suivant l'une quelconque des revendications 1 à 13, caractérisé en ce qu'un orifice de communication (27) avec l'atmosphère est prévu dans la paroi supérieure du corps de distributeur (14).

15. Appareil suivant l'une quelconque des revendications 1 à 14, caractérisé en ce que les conduites de décharge (16) sont montées de façon réglable sur un support (22) en vue de modifier la distance (9) à partir du sol et/ou l'écartement réciproque (17) de leurs buses de débit (7).

16. Appareil suivant l'une quelconque des revendications 1 à 15, caractérisé en ce que le rotor (17) est monté à l'extrémité inférieure d'un arbre d'entraînement (28) traversant la paroi supérieure du corps de distributeur (14) d'une manière étanche et tourillonnant à l'extérieur du corps de distributeur.

17. Appareil suivant l'une quelconque des revendications 1 à 16, caractérisé par une pompe d'alimentation (4) bien connue qui soumet le liquide, dans la zone de l'orifice de la conduite de raccordement, à une pression d'au moins environ 0,5 bar.

18. Appareil suivant l'une quelconque des revendications 1 à 17, caractérisé en ce que la puissance de refoulement de la pompe d'alimentation (4) est réglable.

19. Appareil suivant l'une quelconque des revendications 1 à 18, caractérisé en ce que le régime de rotation du rotor (17) peut être modifié par l'intermédiaire de sont moteur d'entraînement (32).

Fig. 1

Fig. 2

Fig. 3

Fig. 4